# EUROPEAN PATENT APPLICATION

(11) **EP 1 049 027 A2**
(43) Date of publication of application: **02.11.2000**
(21) Application number: 00109373.1
(22) Date of filing: 02.05.2000
(51) Int. Cl.: G06F 17/30

(54) **Web data acquisition apparatus and method, and storage medium storing program for this method**

(30) Priority: 30.04.1999 JP 12344399; 29.07.1999 JP 21519199
(71) Applicant: Seisyou, Shokai, Kanazawa-shi, Ishikawa-ken (JP)
(72) Inventor: Ogawa, Takahiro, c/o Seisyou Shokai, Kanazawa-shi, Ishikawa-ken (JP); Tabata, Masaoki, c/o Seisyou Shokai, Kanazawa-shi, Ishikawa-ken (JP)
(74) Representative: Geyer, Ulrich F., Dr. Dipl.-Phys.

(57) **Abstract**

It is an object to provide a Web data acquisition apparatus and method which can automatically and collectively acquire contents of URLs matching a query condition without any manual operation in a search system on the Internet, and a storage medium storing a program for the method. Even if URLs matching a query condition extend in a plurality of pages at a search site on the Internet, information is automatically acquired upon detection of a next page, thus automatically and collectively acquiring the contents of the URLs matching the query condition without any manual operation. In addition, a display condition is input, and only information of designated fields is displayed as a search result.

## Description

### BACKGROUND OF THE INVENTION

### [Field of the Invention]

The present invention relates to an apparatus and method for collectively acquiring Web data existing on the Internet or the like, and a storage medium storing a program for the method.

### [Description of the Related Art]

Conventionally, various programs for collectively acquiring various kinds of information on home pages on the Internet (to be referred to as Web data hereinafter) have been implemented. For example, a program is available, which is designed to access home pages from the URL (Uniform Resource Locator) of a given home page up to a nesting level upon designation of the URL, the nesting level, and the like, and acquire URL information existing in the home pages. After the URL information is acquired, a user selects offline, from the acquired URL information list, specific URLs indicating specific pages to be downloaded. When the user logs in to the Internet again, the pages of the selected URLs are collectively downloaded.

According to a known program, when the user designates the URL of a given home page and a nesting level, all home pages from the URL to the nesting level are downloaded.

Search pages for searching for various kinds of information exist in the Internet. When the user inputs a query condition such as a keyword on a search page, a list of URLs of home pages matching the query condition is displayed. If many URLs are retrieved, a list is displayed in a plurality of pages. When the user designates (clicks) a desired URL in the displayed list, the corresponding page is displayed on the browser. For example, the following function is provided by the home page of the US Patent and Trademark Office. When the user inputs a query condition on this home page, patents with contents matching the query condition are displayed as a list of URLs. When the user designates a desired URL (patent) from the list, the contents of the patent are displayed.

With the above search, however, only a list of URLs can be obtained as a search result, but the contents of the home pages indicated by the URLs are not automatically downloaded. When, therefore, the user wants to acquire the contents of the home pages indicated by the retrieved URLs, the user must click the URLs in the retrieved URL list one by one to acquire the contents. This is cumbersome operation.

With the use of the above Web data collective acquisition program, Web data can be automatically acquired by tracing all URLs (or URLs selected by the user) existing in a home page. If, however, there are many URLs as a search result, a list of URLs is displayed in a plurality of pages. Since the conventional Web data collective acquisition program has no page turning function, the user must manually designate a range of Web data to be downloaded.

### SUMMARY OF THE INVENTION

It is an object of the present invention to provide a Web data acquisition apparatus and method which can automatically and collectively acquire the contents of URLs matching a query condition without any manual operation in a search system on the Internet, and a storage medium storing a program for the method.

In order to achieve the above object, according to the present invention, there is provided a Web data acquisition apparatus for acquiring Web data of a page for displaying or retrieving information matching a query condition upon inputting the query condition on the Internet, an intranet, or an extranet, comprising means for designating a page as a search target, means for inputting a query condition, means for generating a request for giving an instruction to execute a search under the query condition, and transmitting the request to a server as a search target, means for receiving a response as a search result, storage means for storing contents of the response, means for detecting presence/absence of a next page from the contents, and means for, if the next page is detected, performing operation of acquiring data of the next page by transmitting a request to acquire the next page and storing the data in the storage means, and repeating the operation as long as a next page is detected.

According to the present invention, there is provided a Web data acquisition apparatus for acquiring Web data of a page for displaying or retrieving information matching a query condition upon inputting the query condition on the Internet, an intranet, or an extranet, comprising means for designating a page as a search target, means for inputting a query condition, means for generating a request for giving an instruction to execute a search under the query condition, and transmitting the request to a server as a search target, means for receiving a response as a search result, storage means for downloading the linked page by tracing a link in the response, and storing the downloaded page data, means for detecting presence/absence of a next page from the response, and means for, if the next page is detected, performing operation of acquiring data of the next page by transmitting a request to acquire the next page, downloading the linked page by tracing a link in the acquired page data, and storing the downloaded page data in the storage means, and repeating the operation as long as a next page is detected.

The apparatus may further comprise means for designating a nesting level at which information is acquired, and acquires information by tracing a URL contained in the contents up to the nesting level.

In the apparatus according to the present invention, a search is made for information stored in said storage means under another query condition, and the research result is stored in the storage means.

The apparatus may further comprise means for inputting a display condition for determining information of a specific field of retrieved information, and the information of the field designated under the display condition is extracted from the information stored in the storage means and is displayed.

The apparatus may further comprise means for terminating information acquisition on the basis of a predetermined condition instead of continuing information acquisition as long as a next page is detected.

According to the present invention, there is provided a Web data acquisition method of acquiring Web data of a page for displaying or retrieving information matching a query condition upon inputting the query condition on the Internet, an intranet, or an extranet, comprising the step of designating a page as a search target, the step of inputting a query condition, the step of generating a request for giving an instruction to execute a search under the query condition, and transmitting the request to a server as a search target, the step of receiving a response as a search result, the storage step of storing contents of the response, the step of detecting presence/absence of a next page from the contents, and the step of, if the next page is detected, performing operation of acquiring data of the next page by transmitting a request to acquire the next page and storing the data in the storage step, and repeating the operation as long as a next page is detected.

According to the present invention, there is provided a Web data acquisition method of acquiring Web data of a page for displaying or retrieving information matching a query condition upon inputting the query condition on the Internet, an intranet, or an extranet, comprising the step of designating a page as a search target, the step of inputting a query condition, the step of generating a request for giving an instruction to execute a search under the query condition, and transmitting the request to a server as a search target, the step of receiving a response as a search result, the storage step of downloading the linked page by tracing a link in the response, and storing the downloaded page data, the step of detecting presence/absence of a next page from the response, and the step of, if the next page is detected, performing operation of acquiring data of the next page by transmitting a request to acquire the next page, downloading the linked page by tracing a link in the acquired page data, and storing the downloaded page data in the storage step, and repeating the operation as long as a next page is detected.

The method may further comprise the step of designating a nesting level at which information is acquired, and acquires information by tracing a URL contained in the contents up to the nesting level.

The method may further comprise making a search for information stored in the storage step under another query condition, and storing the research result as a file.

The method may further comprise the step of inputting a display condition for determining information of a specific field of retrieved information, and the information of the field designated under the display condition is extracted from the information stored as the file and is displayed.

The method may further comprise terminating information acquisition on the basis of a predetermined condition instead of continuing information acquisition as long as a next page is detected.

According to the present invention, there is provided a program storage medium storing a program for the Web data acquisition method defined in any one of claims 9 to 14.

### BRIEF DESCRIPTION OF THE DRAWINGS

Fig. 1 is a block diagram showing the overall arrangement of a search system to which a Web data acquisition apparatus and method of the present invention are applied;
Fig. 2 is a view showing an example of an initial search window on a client;
Fig. 3 is a view showing an example of a search result display;
Fig. 4 is a flow chart showing a search procedure;
Figs. 5A to 5C are views each showing an example of the arrangement of a target URL table;
Fig. 6 is a flow chart showing a procedure for outputting retrieved information;
Fig. 7 is a view showing an example of a window of the search page of the US Patent and Trademark Office;
Fig. 8 is a view showing HTML sources (first) of the search page in Fig. 7;
Fig. 9 is a view showing HTML sources (second) of the search page in Fig. 7;
Fig. 10 is a view showing HTML sources (third) of the search page in Fig. 7;
Fig. 11 is a view showing an example of a window of the search page of the Japanese Patent Office;
Fig. 12 is a view showing HTML sources (first) of the search page in Fig. 11;
Fig. 13 is a view showing HTML sources (second) of the search page in Fig. 11;
Fig. 14 is a view showing HTML sources (third) of the search page in Fig. 11;
Fig. 15 is a view showing HTML sources (fourth) of the search page in Fig. 11;
Fig. 16 is a view showing an example of an initial search window in the second embodiment of the present invention; and
Fig. 17 is a flow chart showing a DL subroutine.

### DESCRIPTION OF THE PREFERRED EMBODIMENTS

Embodiments of the present invention will be described below with reference to the accompanying drawings.

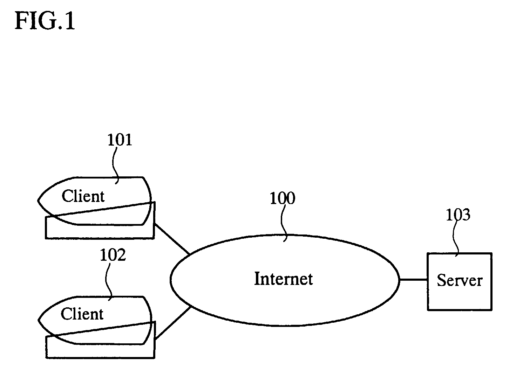

Fig. 1 shows the overall arrangement of a search system to which a Web data acquisition apparatus and method according to the present invention are applied. Clients 101 and 102 and a server 103 as a search site are connected to the Internet 100. Each of the clients 101 and 102 uses a browser (in which a program according to the present invention is installed) to connect to the server 103 and make a search by inputting a query condition. Although the Internet will be exemplified below, the present invention can also be applied to an intranet used within a company or building or an extranet used among a plurality of companies or buildings.

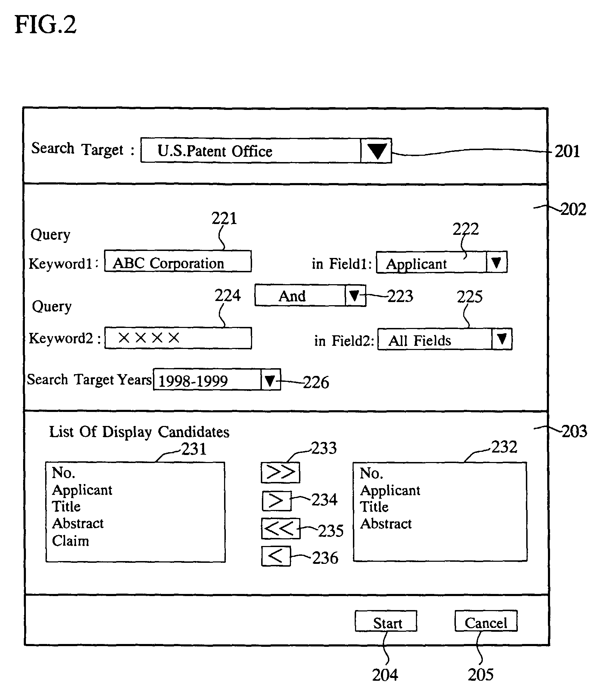

Fig. 2 shows an example of an initial search window on a client. Reference numeral 201 denotes an area for designating a server as a search target. Several search targets are registered in advance (for example, Alta Vista, goo, and Yahoo!). A list of search targets is displayed by clicking an arrow button on the right side of the area 201. A user can select one target from the list. Referring to Fig. 2, the home page of the US Patent and Trademark Office is designated as a search target.

Reference numeral 202 denotes an example of a query input window. Queries that can be input vary with the search targets selected by the search target selection area 201. When, therefore, the search target is changed, the window 202 is switched to another window. Referring to Fig. 2, when the home page of the US Patent and Trademark Office is designated as a search target, the window 202 for inputting a query that can be designated is displayed. On the window 202, reference numeral 221 denotes an input area for a keyword 1; 222, an area for designating a field in which the keyword 1 exists; 224, an input area for a keyword 2; 225, an area for designating a field in which the keyword 2 exists; 223, an area for designating whether to search for the keywords 1 and 2 with the AND operator or OR operator; and 226, an area for designating a range of years to search. An input example in Fig. 2 designates a search for a patent containing "ABC cooperation" as the keyword 1 in "Applicant" field and "xxxx" as the keyword 2 in any of all fields from patents in the range of years 1998 to 1999.

Reference numeral 203 denotes a window for designating a field to be displayed as a search result. A list of the names of fields that can be displayed is displayed in a left box 231. The user can designate fields to be displayed by operating buttons 233 to 236. The designated fields are displayed in a right box 232. The button 233 is used to designate all the fields in the left box 231 and give an instruction to display them in the right box 232. The button 234 is used to designate fields selected by the user in the left box 231 and give an instruction to display the designated fields in the right box 232. Note that the user can select each field by clicking a corresponding field name in the left box 231. Each selected field name is highlighted. The button 235 is used to give an instruction to delete all fields as display targets in the right box 232. The button 236 is used to give an instruction to delete, as display targets, fields selected by the user in the right box 232.

When the user inputs the above query condition and display condition and clicks a start button 204, a search is started. Reference numeral 205 denotes a cancel button for canceling a search. Assume that in addition to information to be input on the window in Fig. 2, the user designates beforehand a nesting level that indicates the extent to which home pages nested in a home page as a search target serving as a parent are to be regarded as search targets.

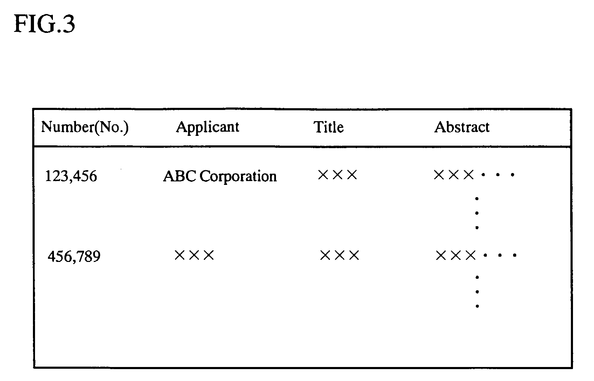

Fig. 3 shows a search result example displayed after a search is conducted by the user upon clicking the start button 204 on the initial search window in Fig. 2. Since the field names designated as search targets in the box 232 in Fig. 2 are "No.", "Applicant", "Title", and "Abstract", the contents of these fields associated with the retrieved patent are displayed, as shown in Fig. 3.

A characteristic feature of this embodiment is, in particular, that when the user inputs a query condition and display condition as shown in Fig. 2 and starts a search, all pieces of information matching the query condition are automatically downloaded.

With a conventional browser, for example, when the user inputs a query condition in a patent search in the US Patent and Trademark Office, he/she can obtain a list of patents matching the query condition. In order to download the contents of each patent, the user must click the patents in the patent list one by one. That is, cumbersome operation is required. With the use of a conventional Web data collective acquisition program, the contents of the respective patents can be downloaded by automatically tracing URLs from the window of a retrieved patent list. However, this program has no page turning function. If, therefore, a patent list extends in many pages, the user must turn each page and designate download operation on each page.

In contrast to this, according to this embodiment, when the user inputs a query condition and display condition, as shown in Fig. 2, and starts a search, all pieces of information matching the query condition are automatically downloaded. Even if a retrieved patent list extends in many pages, all patents matching the query condition are downloaded by automatically tracing the pages.

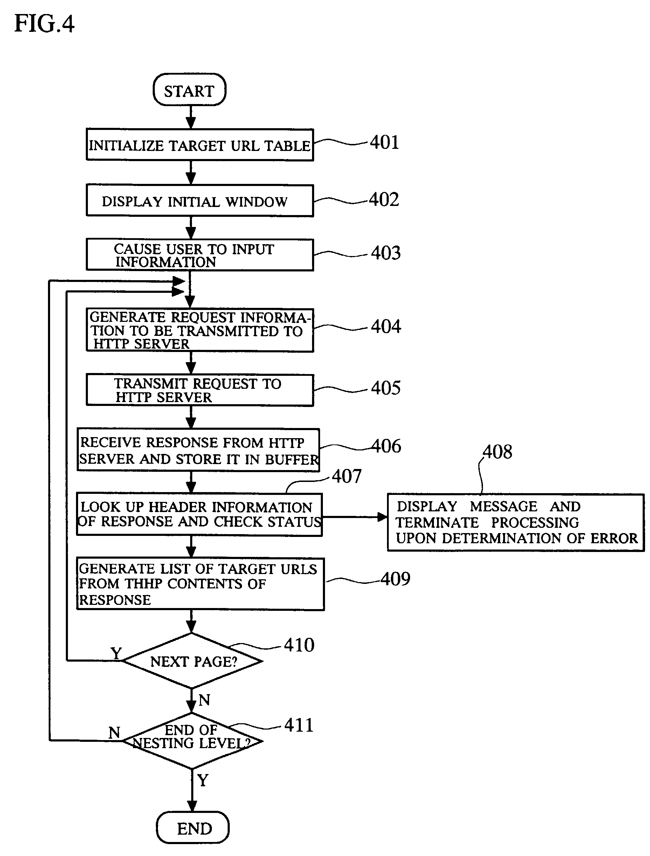

Fig. 4 is a flow chart showing a search procedure in this embodiment. In step 401, a target URL table storing a search result and the like is initialized. The target URL table will be described later. In step 402, an initial search window like the one shown in Fig. 2 is displayed. In step 403, input information is received on the initial window. Then the user clicks the start button 204, search processing in step 404 and the subsequent steps is started. In step 404, request information to be transmitted to an HTTP server as a search target is generated in accordance with the input information like that shown in Fig. 2. In step 405, the request is transmitted to the HTTP server. In step 406, a response (search result) from the HTTP server is received and stored in the buffer. In step 407, the status of the response is checked by referring to its header information. If an error is detected, a message is displayed, and the processing is terminated in step 408. If no error is detected, information is registered in the target URL table on the basis of the HTTP contents of the response.

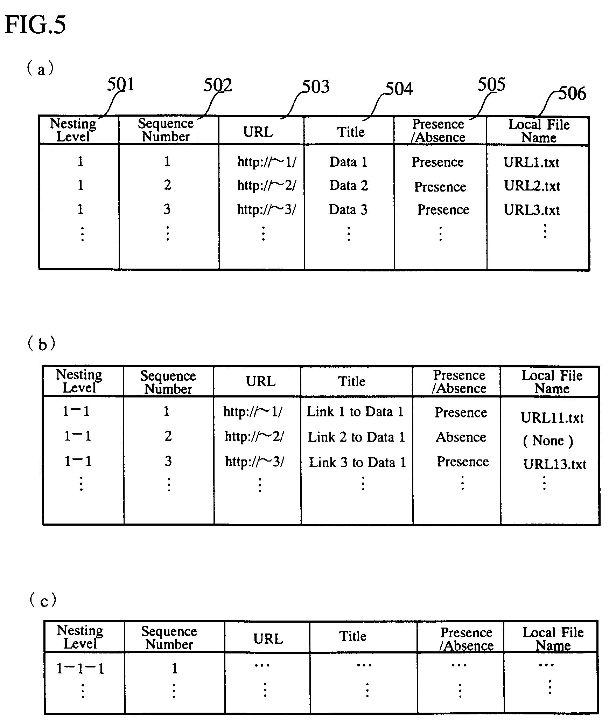

The target URL table will be described below. Each of Figs. 5A to 5C shows an example of the arrangement of the target URL table. Fig. 5A shows the target URL table whose area is ensured and initialized in step 401. A nesting level 501 is a field in which the nesting level of each retrieved home page is stored. A sequence number 502 is a field in which sequence numbers added to search results in sequential order are stored. A URL 503 is a field in which the URLs of home pages as search results are stored. A title 504 is a field in which the tiles of home pages as search results are stored. A presence/absence 505 is a field in which information indicating whether each home page as a search result actually exists or not is stored. A local file name 506 is a field in which the names of local files in which the contents of home pages as search results are stored.

Referring back to Fig. 4, the search result received in step 406 is, for example, the page data of a list of URLs matching the query condition. For example, in a patent search in the US Patent and Trademark Office, a patent list containing links to the respective patents (the URLs of home pages in which the contents of the patents are written are embedded in the display portions indicating the patents) is received as the page data of the search result. In step 409, a predetermined file name is added to the page data of the patent list, the resultant data is stored as a local file, and the file name is registered in the local file name 506 of the target URL table in Fig. 5A. Since the received search result corresponds to the parent-level search, "1" is set in the nesting level 501. In addition, since this data is registered first in the target URL table in Fig. 5A, "1" is set in the sequence number 502. The URL and title of the page of the search result are respectively set in the URL 503 and title 504. Since the page data actually exists, "presence" is set in the presence/absence 505.

After step 409, the HTTP contents of the response are analyzed to check in step 410 whether the next page is designated. For example, the designation of the next page is detected by searching for a specific character such as "Next" or button for designating the display of the next page. Note that the presence/absence of the next page may be determined by any scheme as long as it is determined by analyzing the HTTP contents of the response. Some page indicates the first 20 search results of a total of 100 search results with a description like "1-20 of 100". With such a page, the presence of the next page can be determined by checking this description. If the next page is designated, the flow returns to step 404 to repeat acquisition processing of the page data of the URL of the next page. With regard to the next page, "2" is registered in the sequence number 502 of the URL table in Fig. 5A. This processing is repeated until no next page is present, thus setting the target URL table in Fig. 5A. In step 404 after step 403, a request containing the query condition input in step 403 is generated. In step 404 after step 410, a request for requesting the page data of the next page is generated.

If there is no next page at nesting level "1", the flow advances from step 410 to step 411 to check whether the nesting level has reached the designated level. If NO in step 411, the processing from step 404 is repeated for the next nesting level. For example, after the URL table in Fig. 5A at nesting level "1" is set, the files indicated by the local file name 506 registered in the table are looked up one by one to sequentially extract the URLs contained in the local files, and the processing from step 404 is performed. Figs. 5B and 5C respectively show URL tables with nesting levels "2" and "3". Note that the nesting levels are written like "1-1" and "1-1-1". Assume that in step 404 after step 411, a request for requesting the page data of the URL contained in the above local file is generated. If it is determined in step 411 that the processing is done up to the designated nesting level, the search processing is terminated.

With the above processing, all pieces of information matching the query condition are acquired in the target URL table (and the local files indicated by the local file name 506), as shown in Figs. 5A to 5C. Even if search results are displayed in a list extending in a plurality of pages, information is automatically acquired from all the pages without any manual operation.

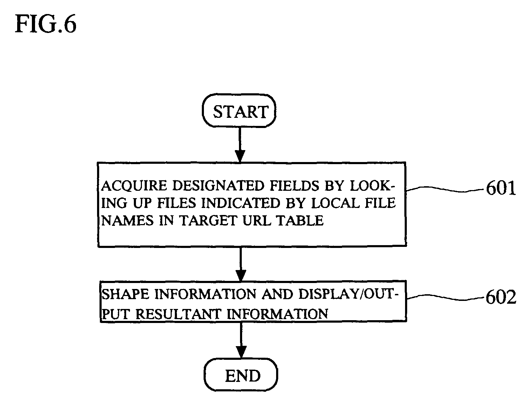

Fig. 6 shows a procedure for outputting retrieved information. In step 601, the information of display target fields designated in the box 232 in Fig. 2 is acquired by looking up the files indicated by the local file name 506 in the transmission in Figs. 5A to 5C. Assume that in a patent search in the US Patent and Trademark Office, "No.", "Applicant", "Title", and "Abstract" are designated as display targets. In this case, the pieces of information of these fields are extracted from the respective local files. In step 602, the extracted information is shaped to be displayed/output in the form shown in Fig. 3.

In the above embodiment, the window in Fig. 2 and the output sample in Fig. 3 are examples and may be modified, as needed. In addition, in the query input area 202 on the window in Fig. 2, another query condition may be input outside the range of the query provided on the home page as the search target. In this case, a search is conducted within the range of the query provided on the home page as the search target. When a response as a search result is received in step 406 in Fig. 4, a search is made under the added query condition, and only information matching the query condition may be stored in the buffer. In the above embodiment, all pieces of information matching the query condition are stored in the transmission and local files. However, only the pieces of information of fields designated by the display condition may be stored in local files.

In the above embodiment, a program for executing the processing in Fig. 4 or 6 can be implemented in various forms, e.g., being newly generated as a browser, implemented by using a CGI (Common Gateway Interface) function, and implemented as the plug-in of an existing browser. In addition, such a program can be implemented independently of an OS and, for example, can be implemented on Windows (tradename in Microsoft Corporation)-based OS or UNIX-based OS.

In the above embodiment, a pre-registered search site is designated as a search target, and a query corresponding to each search site is displayed in the area 202. However, the display in the area 202 may be dynamically changed in accordance with a search target arbitrarily input by the user. Assume that the URL of a search target to be accessed for the first time is input in the area 201. In this case, a page of the SETUP message may be received, and a portion for inputting a query may be extracted from the page data, thus displaying it in the area 202.

A practical procedure for automatically generating the initial search window in Fig. 2 from the page data of a search target will be described in detail below. A procedure for the search page of the US Patent and Trademark Office will be described first. A procedure for the search page of the Japanese Patent Office will be described later.

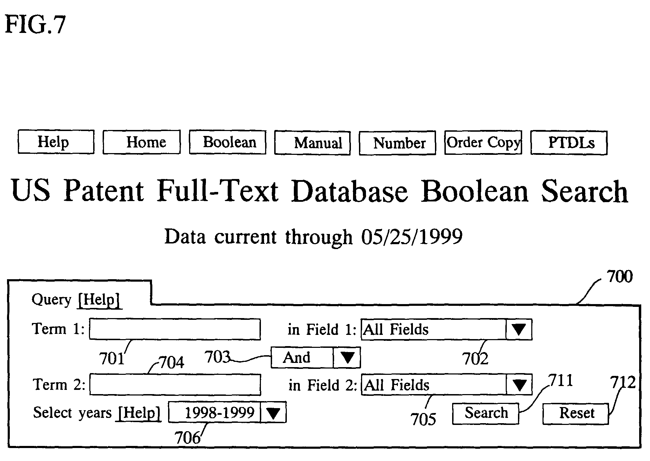

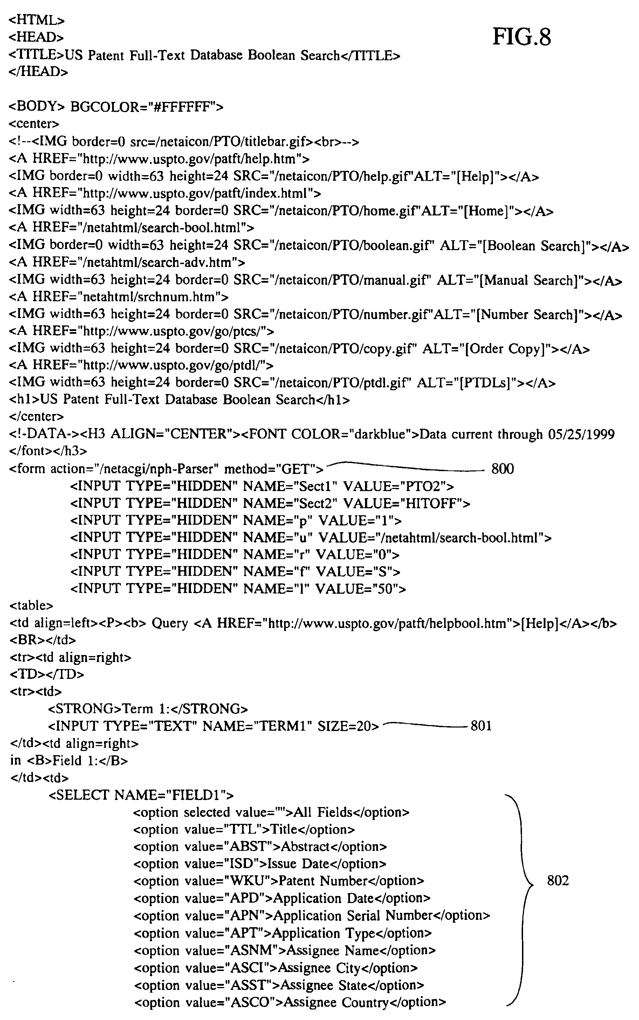

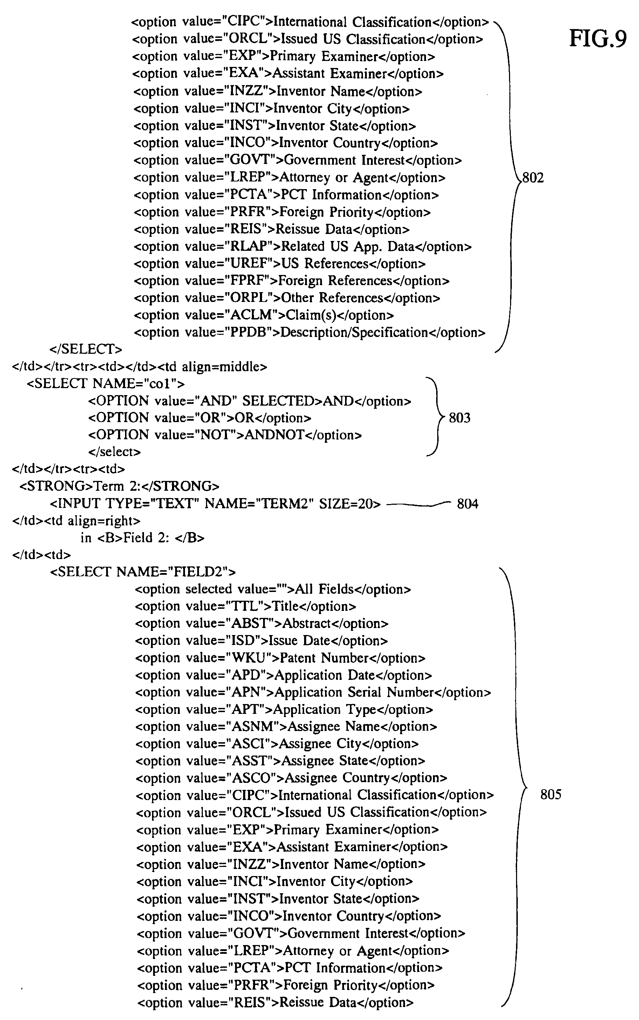

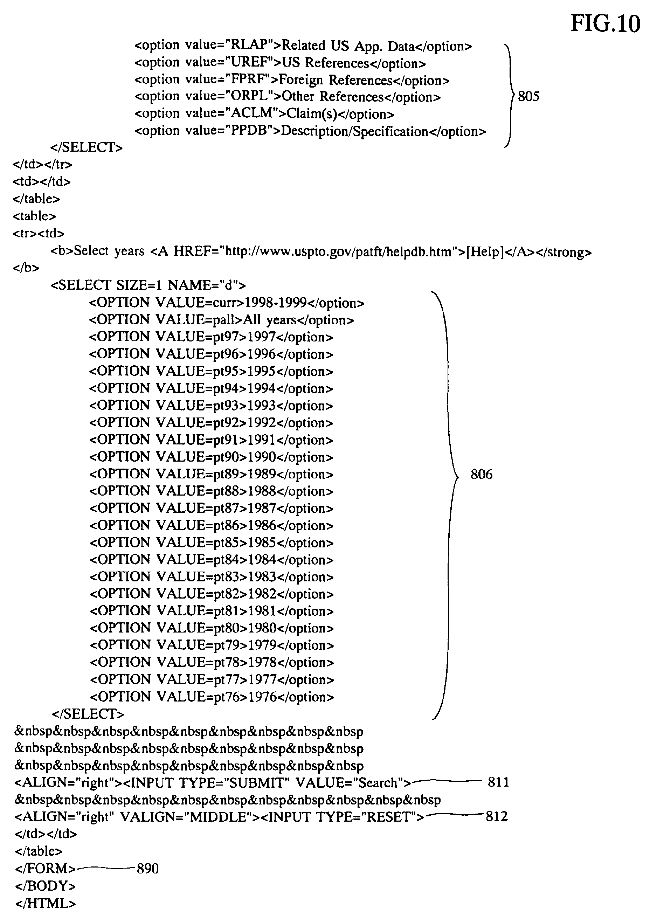

Fig. 7 shows a window of the search page of the US Patent and Trademark Office, and more specifically, an example of displaying the HTML document of the search page without any modification. Figs. 8 to 10 show the HTML sources. A display 700 in Fig. 7 corresponds to HTML contents from a 〈form〉 tag 800 to a 〈/form〉 tag 890 of the HTML sources in Figs. 8 to 10. A display element 701 corresponds to the HTML source 801; a display element 702, to the HTML source 802; a display element 703, to the HTML source 803; a display element 704, to the HTML source 804; a display element 705, to the HTML source 805; a display element 706, to the HTML source 806; a display element 711, to the HTML source 811; and a display element 712, to the HTML source 812. When the user accesses this search page, these HTML sources are sent. A window like the one shown in Fig. 7 can be obtained by displaying the sources with a general browser.

Instead of the window in Fig. 7, the initial search window in Fig. 2 is generated and output by analyzing the HTML contents from the 〈form〉 tag 800 to the 〈/form〉 tag 890 of the HTML sources. In this case, the contents from 〈form〉 to 〈/form〉 may be basically displayed as the window 202 in Fig. 2. Note, however, that the button portions 711 and 712 in Fig. 7 are written in 〈INPUT〉 tags like the HTML sources 811 and 812. For this reason, the 〈INPUT〉 tags with TYPE = "SUBMIT", "BUTTON", and "RESET" are converted into the form of HTML comments. More specifically, for example, 〈INPUT ....〉 may be converted into 〈!--〈INPUT ....〉--〉.

If a problem arises when the window is displayed without any modification, only tags for inputting values may be extracted to display them while arranging them vertically. In this case, the names of input values are made to match the search page. In the case of the search page of the US Patent and Trademark Office, for example, the HTML contents of 〈INPUT〉 and 〈SELECT〉 to 〈/SELECT〉 are extracted to be displayed while arranged in correspondence with each other. This is a general technique that can be applied to other search pages.

With regard to the display of the window 203 in Fig. 2, values indicated by the 〈OPTION〉 to 〈/OPTION〉 items in the 〈SELECT〉 tag of the HTML source may be extracted to be displayed in the same manner as the box 231 in Fig. 2.

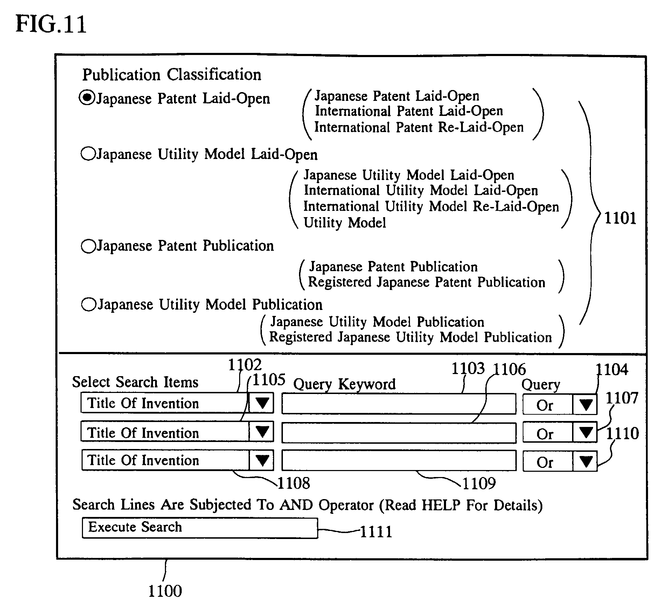

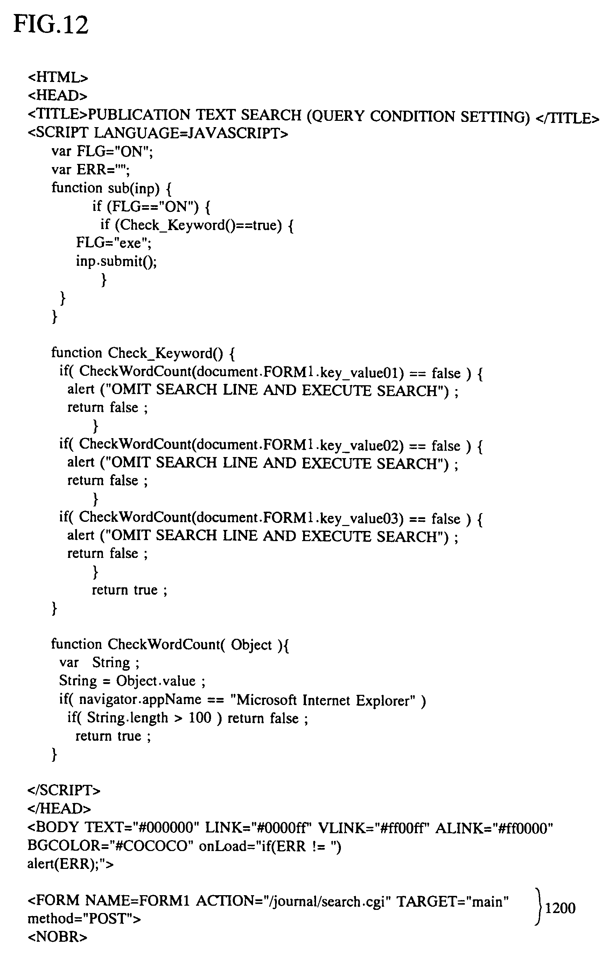

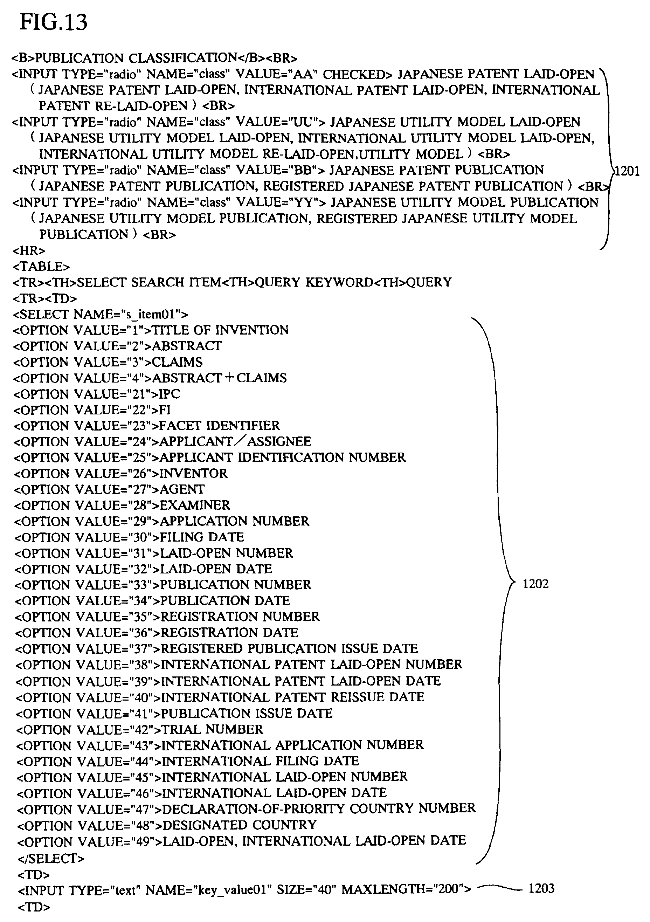

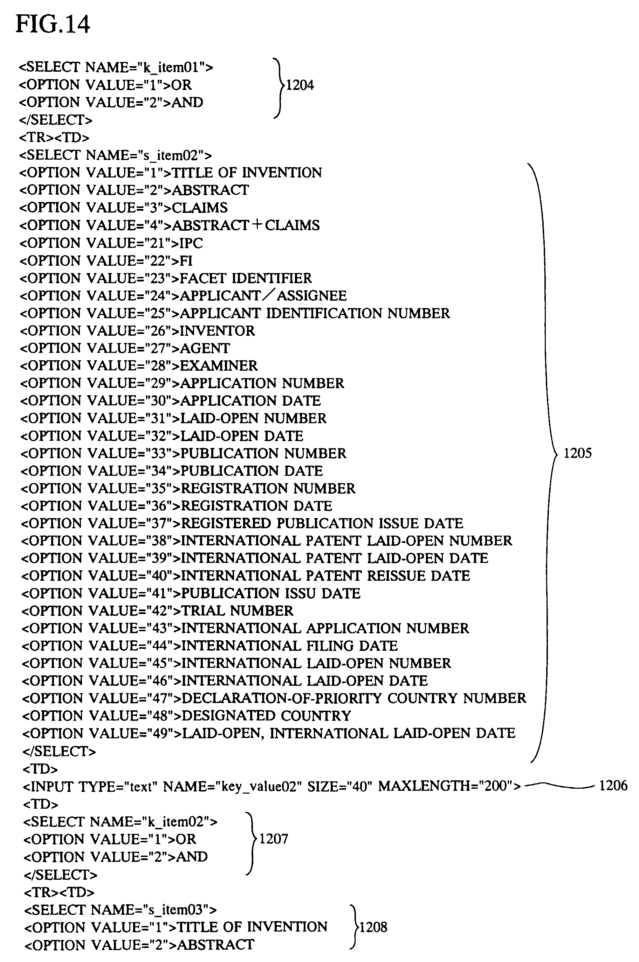

Fig. 11 shows a window of the search page of the Japanese Patent Office, and more specifically, an example of displaying the HTML document of the search page without any modification. Figs. 12 to 15 show the HTML sources. A display 1100 in Fig. 11 corresponds to HTML contents from a 〈form〉 tag 1200 to a 〈/form〉 tag 1290 of the HTML sources in Figs. 12 to 15. A display element 1101 corresponds to the HTML source 1201; a display element 1102, to the HTML source 1202; a display element 1103, to the HTML source 1203; a display element 1104, to the HTML source 1204; a display element 1105, to the HTML source 1205; a display element 1106, to the HTML source 1206; a display element 1107, to the HTML source 1207; a display element 1108, to the HTML source 1208; a display element 1109, to the HTML source 1209; a display element 1110, to the HTML source 1210; and a display element 1111, to the HTML source 1211. When the user accesses the search page, these HTML sources are sent. A window like the one shown in Fig. 11 can be obtained by displaying the sources with a general browser.

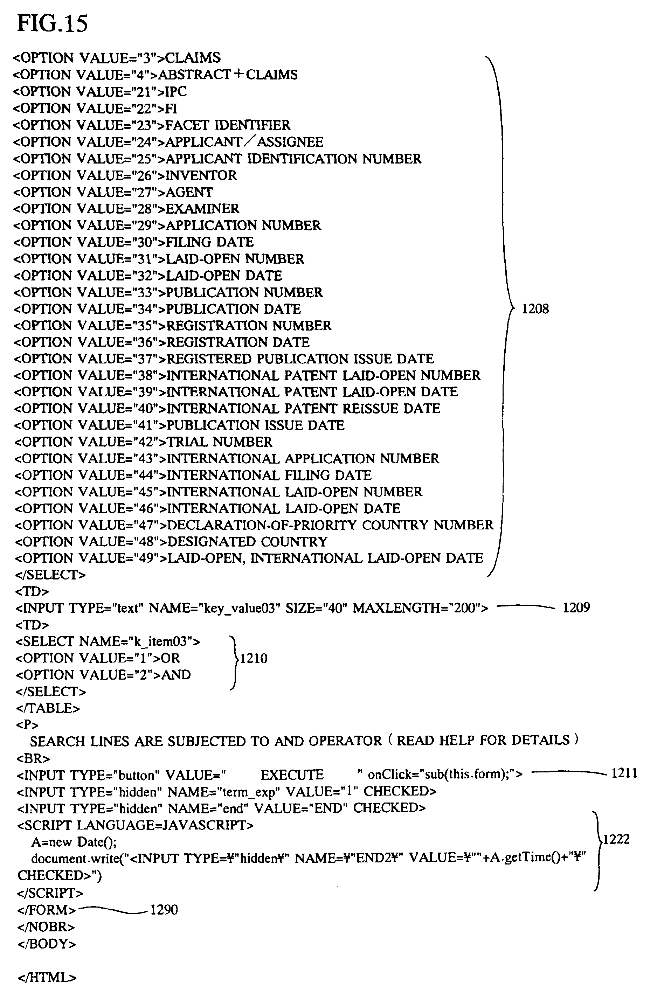

In the case of the Japanese Patent Office, since input information is dynamically generated by Javascript (the HTML source 1222 in Fig. 15), 〈SCRIPT〉 to 〈/SCRIPT〉 statements in the contents from the 〈form〉 tag 1200 to the 〈/form〉 tag must be extracted.

An initial search window like the one shown in Fig. 2 may be generated from the HTML sources in Figs. 12 to 15 as in the above case of the search page of the US Patent and Trademark Office. With regard to the display of the display candidate list in the box 231 in Fig. 2, the values indicated by the 〈OPTION〉 items of the 〈SELECT〉 tags 1202, 1205, and 1208 may be displayed. Note that in the case of the Japanese Patent Office, 〈/OPTION〉 is omitted.

The second embodiment of the present invention will be described next. In the first embodiment described above, downloaded pages are stored in a URL table like the one shown in Figs. 5A to 5C. In the second embodiment, such a table is not generated, and a downloaded result is stored in a predetermined target storage directory. A description of portions similar to those in the first embodiment will be omitted, and only points different from those in the first embodiment will be described below.

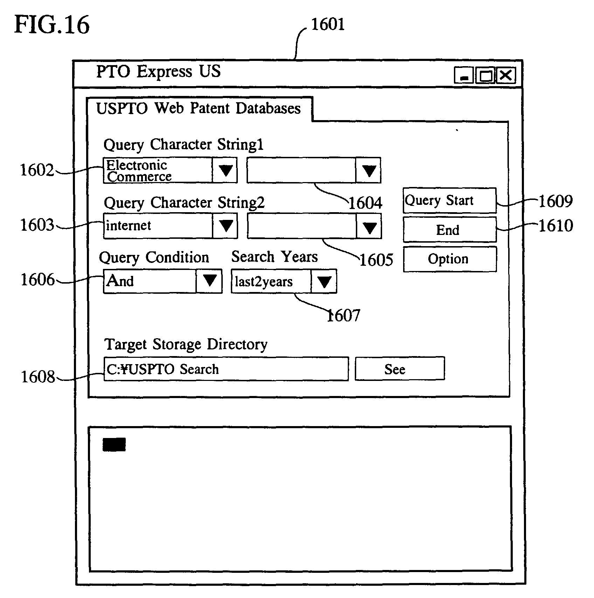

Fig. 16 shows an example (replacing the one shown in Fig. 2) of an initial search window in the second embodiment. When one of several pre-registered search targets is selected, the window in Fig. 16 is displayed. This window 1601 includes query character string input areas 1602 and 1603, designation areas 1604 and 1605 for fields in which query character strings exist, a query condition input area 1606, a search year input area 1607, and a target storage directory designation area 1608. The query character string input areas 1602 and 1603 correspond to the areas 221 and 224 in Fig. 2. The designation areas 1604 and 1605 for fields in which query character strings exist correspond to the areas 222 and 225 in Fig. 2. The query condition input area 1606 corresponds to the area 223 in Fig. 2. The search year input area 1607 corresponds to the area 226 in Fig. 2.

The target storage directory designation area 1608 is used to designate a directory for storing a file in which a search result is downloaded. A search start button 1609 is a button for giving an instruction to start a search. An end button 1610 is a button for giving an instruction to end a search (forcibly end a search). The user inputs query character strings and query conditions on the window in Fig. 16, and starts a search by clicking the search start button 1609.

In this embodiment, a search result is stored in the target storage directory designation area 1608 but is not displayed as shown in Fig. 3. The user knows the search result by accessing the downloaded file afterward, as needed. Therefore, result output processing like the one shown in Fig. 6 is not required.

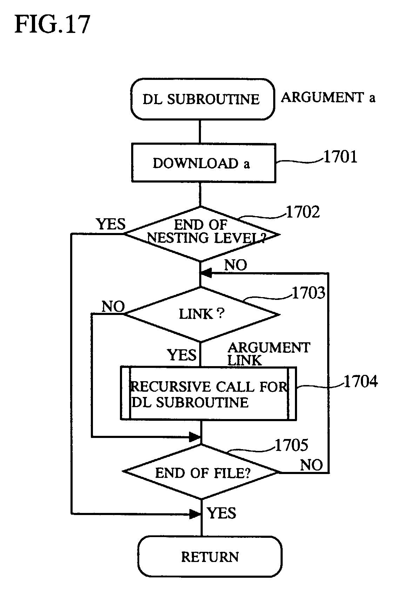

The search procedure in this embodiment is the same as that in Fig. 4 except that steps 404 to 409 in Fig. 4 are replaced with a call statement for the DL (DownLoad) subroutine in Fig. 17. The DL subroutine is a recursive call subroutine.

The procedure in the DL subroutine will be described. In step 1701, a given argument a is downloaded. The downloaded data is stored as a file to which a predetermined name is attached in a target storage directory. When a call is made first from the processing in Fig. 4, a URL containing a request for a search under the input query condition is designated as the argument a. A list of items matching the input query condition is obtained first as a response. In the case of the search page of the US Patent and Trademark Office, for example, a list of patents matching the input query condition can be acquired in step 1701.

In step 1702, it is checked whether the current processing has reached the last nesting level. Nesting levels may be fixed to predetermined values or arbitrarily set. Assume that in this case, the page acquired first in step 1701 is at nesting level 1, and the processing is to be terminated at nesting level 2 set as a fixed value.

Since the page acquired first in step 1701, i.e., a list of patents matching the query condition, is at nesting level 1, the flow advances from step 1702 to step 1703. In step 1703, it is checked whether any link is present in the acquired page. If YES in step 1703, the DL subroutine is recursively called in step 1704. In this case, a URL designating the link is transferred as an argument.

In the DL subroutine activated by the recursive call, the contents of the URL of the link are downloaded in step 1701. The downloaded data is stored as a file with a predetermined name in a target storage directory. The nesting level is then checked in step 1702. In this case, since nesting level 2 is determined, the processing is terminated. If download operation up to a lower nesting level is designated, the processing in step 1703 and the subsequent steps may be continued.

If the flow returns after the recursive call in step 1704, it is checked in step 1705 whether the processing is completed up to the end of the currently processed page. If NO in step 1705, the flow returns to step 1703 to continue the processing for the link in the page. If YES in 1705, the processing is terminated.

In the above manner, downloaded files are stored in the target storage directory. As a consequence, all patent files matching the query condition are stored in the target storage directory, and hence the user can use them, as needed.

More specifically, when downloaded data is to be stored in the target storage directory, a directory named as "query character string 1-query character string 2" is generated under the target storage directory, and the file of the downloaded data is stored under the directory. In the case of the query character strings in Fig. 16, a directory named as "electronic commercial transaction-internet" is generated, and a downloaded file is stored under the directory. If a query character string includes a character that cannot be used for a directory name, e.g., ",", this character is replaced with "_" (underline).

In the first and second embodiments, processing is continued until data matching a query condition are downloaded. If, however, the user gives an instruction to cancel or terminate the processing during the processing, the processing is forcibly terminated. Further, if there is provided a input area of a number of pages to be downloaded, the information acquisition is terminated when the page data of the number is downloaded.

As has been described above, according to the present invention, on a search site on the Internet, even if URLs matching a query condition extend in a plurality of pages, the next page is detected, and information is automatically acquired. Therefore, the contents of URLs matching the query can be collectively acquired automatically without any manual operation. In addition, since only the information of designated fields is displayed by inputting a display condition, the user need not perform any operation of extracting only necessary portions from the acquired information, but a search result containing only necessary information can be automatically obtained.

According to its broadest aspect the invention relates to a Web data acquisition apparatus for acquiring Web data of a page for displaying or retrieving information matching a query condition upon inputting the query condition on the Internet, and Intranet, or an extranet, comprising: means for designating a page as a search target; means for inputting a query condition; and means for generating a request for giving an instruction to execute a search under the query condition and transmitting the request to a server as a search target.

### SUMMARY OF THE INVENTION

1. A Web data acquisition apparatus for acquiring Web data of a page for displaying or retrieving information matching a query condition upon inputting the query condition on the Internet, an intranet, or an extranet, comprising:
   means for designating a page as a search target;
   means for inputting a query condition;
   means for generating a request for giving an instruction to execute a search under the query condition, and transmitting the request to a server as a search target;
   means for receiving a response as a search result;
   storage means for storing contents of the response;
   means for detecting presence/absence of a next page from the contents; and
   means for, if the next page is detected, performing operation of acquiring data of the next page by transmitting a request to acquire the next page and storing the data in said storage means, and repeating the operation as long as a next page is detected.
2. A Web data acquisition apparatus for acquiring Web data of a page for displaying or retrieving information matching a query condition upon inputting the query condition on the Internet, an intranet, or an extranet, comprising:
   means for designating a page as a search target;
   means for inputting a query condition;
   means for generating a request for giving an instruction to execute a search under the query condition, and transmitting the request to a server as a search target;
   means for receiving a response as a search result;
   storage means for downloading the linked page by tracing a link in the response, and storing the downloaded page data;
   means for detecting presence/absence of a next page from the response; and
   means for, if the next page is detected, performing operation of acquiring data of the next page by transmitting a request to acquire the next page, downloading the linked page by tracing a link in the acquired page data, and storing the downloaded page data in said storage means, and repeating the operation as long as a next page is detected.
3. A Web data acquisition apparatus for acquiring Web data of a page for displaying or retrieving information matching a query condition upon inputting the query condition on the Internet, an intranet, or an extranet, comprising:
   means for designating a page as a search target;
   means for inputting a query condition;
   means for generating a request for giving an instruction to execute a search under the query condition, and transmitting the request to a server as a search target;
   means for receiving a response as a search result;
   means for detecting presence/absence of a next page from contents of the response; and
   means for, if the next page is detected, performing operation of acquiring data of the next page by transmitting a request to acquire the next page, and repeating the operation as long as a next page is detected.
4. A Web data acquisition apparatus for acquiring Web data of a page for displaying or retrieving information matching a query condition upon inputting the query condition on the Internet, an intranet, or an extranet, comprising:
   means for designating a page as a search target;
   means for inputting a query condition;
   means for generating a request for giving an instruction to execute a search under the query condition, and transmitting the request to a server as a search target;
   means for receiving a response as a search result;
   means for downloading the linked page by tracing a link in the response;
   means for detecting presence/absence of a next page from the response; and
   means for, if the next page is detected, performing operation of acquiring data of the next page by transmitting a request to acquire the next page, downloading the linked page by tracing a link in the acquired page data, and repeating the operation as long as a next page is detected.
5. An apparatus
   wherein said apparatus further comprises means for designating a nesting level at which information is acquired, and acquires information by tracing a URL contained in the contents up to the nesting level.
6. An apparatus
   wherein a search is made for information stored in said storage means under another query condition, and the research result is stored in said storage means.
7. An apparatus
   wherein
   said apparatus further comprises means for inputting a display condition for determining information of a specific field of retrieved information, and
   the information of the field designated under the display condition is extracted from the information stored in said storage means and is displayed.
8. An apparatus
   further comprising means for terminating information acquisition on the basis of a predetermined condition instead of continuing information acquisition as long as a next page is detected.
9. A Web data acquisition method of acquiring Web data of a page for displaying or retrieving information matching a query condition upon inputting the query condition on the Internet, an intranet, or an extranet, comprising:
   the step of designating a page as a search target;
   the step of inputting a query condition;
   the step of generating a request for giving an instruction to execute a search under the query condition, and transmitting the request to a server as a search target;
   the step of receiving a response as a search result;
   the storage step of storing contents of the response;
   the step of detecting presence/absence of a next page from the contents; and
   the step of, if the next page is detected, performing operation of acquiring data of the next page by transmitting a request to acquire the next page and storing the data in the storage step, and repeating the operation as long as a next page is detected.
10. A Web data acquisition method of acquiring Web data of a page for displaying or retrieving information matching a query condition upon inputting the query condition on the Internet, an intranet, or an extranet, comprising:
   the step of designating a page as a search target;
   the step of inputting a query condition;
   the step of generating a request for giving an instruction to execute a search under the query condition, and transmitting the request to a server as a search target;
   the step of receiving a response as a search result;
   the storage step of downloading the linked page by tracing a link in the response, and storing the downloaded page data;
   the step of detecting presence/absence of a next page from the response; and
   the step of, if the next page is detected, performing operation of acquiring data of the next page by transmitting a request to acquire the next page, downloading the linked page by tracing a link in the acquired page data, and storing the downloaded page data in the storage step, and repeating the operation as long as a next page is detected.
11. A method
   wherein the method further comprises the step of designating a nesting level at which information is acquired, and information is acquired by tracing a URL contained in the contents up to the nesting level.
12. A method
   further comprising making a search for information stored as the file under another query condition, and storing the research result as a file.
13. A method
   wherein
   the method further comprises the step of inputting a display condition for determining information of a specific field of retrieved information, and
   the information of the field designated under the display condition is extracted from the information stored as the file and is displayed.
14. A method
   further comprising terminating information acquisition on the basis of a predetermined condition instead of continuing information acquisition as long as a next page is detected.
15. A program storage medium storing a program for the Web data acquisition method.

## Claims

1. A Web data acquisition apparatus for acquiring Web data of a page for displaying or retrieving information matching a query condition upon inputting the query condition on the Internet, an intranet, or an extranet, comprising:
means for designating a page as a search target;
means for inputting a query condition;
means for generating a request for giving an instruction to execute a search under the query condition, and transmitting the request to a server as a search target;
means for receiving a response as a search result;
storage means for storing contents of the response;
means for detecting presence/absence of a next page from the contents; and
means for, if the next page is detected, performing operation of acquiring data of the next page by transmitting a request to acquire the next page and storing the data in said storage means, and repeating the operation as long as a next page is detected.

2. A Web data acquisition apparatus for acquiring Web data of a page for displaying or retrieving information matching a query condition upon inputting the query condition on the Internet, an intranet, or an extranet, comprising:
means for designating a page as a search target;
means for inputting a query condition;
means for generating a request for giving an instruction to execute a search under the query condition, and transmitting the request to a server as a search target;
means for receiving a response as a search result;
storage means for downloading the linked page by tracing a link in the response, and storing the downloaded page data;
means for detecting presence/absence of a next page from the response; and
means for, if the next page is detected, performing operation of acquiring data of the next page by transmitting a request to acquire the next page, downloading the linked page by tracing a link in the acquired page data, and storing the downloaded page data in said storage means, and repeating the operation as long as a next page is detected.

3. A Web data acquisition apparatus for acquiring Web data of a page for displaying or retrieving information matching a query condition upon inputting the query condition on the Internet, an intranet, or an extranet, comprising:
means for designating a page as a search target;
means for inputting a query condition;
means for generating a request for giving an instruction to execute a search under the query condition, and transmitting the request to a server as a search target;
means for receiving a response as a search result;
means for detecting presence/absence of a next page from contents of the response; and
means for, if the next page is detected, performing operation of acquiring data of the next page by transmitting a request to acquire the next page, and repeating the operation as long as a next page is detected.

4. A Web data acquisition apparatus for acquiring Web data of a page for displaying or retrieving information matching a query condition upon inputting the query condition on the Internet, an intranet, or an extranet, comprising:
means for designating a page as a search target;
means for inputting a query condition;
means for generating a request for giving an instruction to execute a search under the query condition, and transmitting the request to a server as a search target;
means for receiving a response as a search result;
means for downloading the linked page by tracing a link in the response;
means for detecting presence/absence of a next page from the response; and
means for, if the next page is detected, performing operation of acquiring data of the next page by transmitting a request to acquire the next page, downloading the linked page by tracing a link in the acquired page data, and repeating the operation as long as a next page is detected.

5. An apparatus according to any of the preceding claims wherein said apparatus further comprises means for designating a nesting level at which information is acquired, and acquires information by tracing a URL contained in the contents up to the nesting level,
and/or wherein preferably
a search is made for information stored in said storage means under another query condition, and the research result is stored in said storage means,
and/or wherein preferably
said apparatus further comprises means for inputting a display condition for determining information of a specific field of retrieved information, and
the information of the field designated under the display condition is extracted from the information stored in said storage means and is displayed,
and/or further preferably
comprising means for terminating information acquisition on the basis of a predetermined condition instead of continuing information acquisition as long as a next page is detected.

6. A Web data acquisition method of acquiring Web data of a page for displaying or retrieving information matching a query condition upon inputting the query condition on the Internet, an intranet, or an extranet, comprising:
the step of designating a page as a search target;
the step of inputting a query condition;
the step of generating a request for giving an instruction to execute a search under the query condition, and transmitting the request to a server as a search target;
the step of receiving a response as a search result;
the storage step of storing contents of the response;
the step of detecting presence/absence of a next page from the contents; and
the step of, if the next page is detected, performing operation of acquiring data of the next page by transmitting a request to acquire the next page and storing the data in the storage step, and repeating the operation as long as a next page is detected.

7. A Web data acquisition method of acquiring Web data of a page for displaying or retrieving information matching a query condition upon inputting the query condition on the Internet, an intranet, or an extranet, comprising:
the step of designating a page as a search target;
the step of inputting a query condition;
the step of generating a request for giving an instruction to execute a search under the query condition, and transmitting the request to a server as a search target;
the step of receiving a response as a search result;
the storage step of downloading the linked page by tracing a link in the response, and storing the downloaded page data;
the step of detecting presence/absence of a next page from the response; and
the step of, if the next page is detected, performing operation of acquiring data of the next page by transmitting a request to acquire the next page, downloading the linked page by tracing a link in the acquired page data, and storing the downloaded page data in the storage step, and repeating the operation as long as a next page is detected.

8. A method according to any of the preceding claims wherein the method further comprises the step of designating a nesting level at which information is acquired, and information is acquired by tracing a URL contained in the contents up to the nesting level,
and/or further preferably
comprising making a search for information stored as the file under another query condition, and storing the research result as a file,
and/or wherein preferably
the method further comprises the step of inputting a display condition for determining information of a specific field of retrieved information, and
the information of the field designated under the display condition is extracted from the information stored as the file and is displayed,
and/or further preferably
comprising terminating information acquisition on the basis of a predetermined condition instead of continuing information acquisition as long as a next page is detected.

9. A program storage medium storing a program for the Web data acquisition method defined in of the preceding claims.

10. A Web data acquisition apparatus for acquiring Web data of a page for displaying or retrieving information matching a query condition upon inputting the query condition on the Internet, and Intranet, or an extranet, comprising:
means for designating a page as a search target;
means for inputting a query condition; and
means for generating a request for giving an instruction to execute a search under the query condition and transmitting the request to a server as a search target.
